# EUROPÄISCHE PATENTANMELDUNG

(11) **EP 1 621 381 A2**
(43) Veröffentlichungstag der Anmeldung: **01.02.2006**
(21) Anmeldenummer: 05014626.5
(22) Anmeldetag: 06.07.2005
(51) Int. Cl.: B60J 1/20

(54) **Farbiges Fensterrollo**

(30) Priorität: 28.07.2004 DE 102004036648
(71) Anmelder: BOS GmbH & Co. KG, 73760 Ostfildern (DE)
(72) Erfinder: Lingemann, Gerald, 71394 Kernen i.R. (DE); Schlecht, Werner P., 71665 Vaihingen (DE)
(74) Vertreter: Rüger, Barthelt & Abel Patentanwälte

(57) **Zusammenfassung**

Fensterrollos von Kraftfahrzeugen weisen eine Rollobahn (25) auf. Die Rollobahn (25) ist auf der dem Fahrzeuginneren zugekehrten Seite in einer Weise farbig, wie es der Innenausstattung des Fahrzeugs entspricht. Die Außenseite hingegen zeigt eine Farbe entsprechend der Lackierung des Fahrzeugs, zumindest auf Höhe des Fensters.

## Beschreibung

Fensterrollos an Kraftfahrzeugen werden dazu verwendet, die Sonneneinstrahlung in das Fahrzeuginnere zu vermindern, oder um ein Hineinsehen in das Fahrzeuginnere, insbesondere im Fondbereich, auszuschließen.

Die bisher verwendeten Fensterrollos bestehen aus einer gelochten, schwarz eingefärbten Folie oder einem ebenfalls schwarz eingefärbten Kettengewirke.

Solche Rollos bilden bei farbigen Fahrzeuglackierungen oder bei weißen Fahrzeugen einen großflächigen schwarzen Flecken, der den ästhetischen Karosserieeindruck unter Umständen erheblich beeinträchtigen kann. Noch ungünstiger sind die Verhältnisse im Fahrzeuginneren. Die Innenauskleidung und der Himmel des Fahrzeugs werden üblicherweise nicht in schwarz gewählt. Hier bilden die ausgefahrenen Rollos denselben dunklen Fleck der, wenn man ihn einmal als solchen wahrgenommen hat, störend ist.

Ausgehend hiervon ist es Aufgabe der Erfindung ein Rollo zu schaffen, dass sich besser in das äußere Erscheinungsbild des Kraftfahrzeugs einfügt. Außerdem ist es Aufgabe der Erfindung ein Rollo zu schaffen, dass sich besser in den Innenraum eines Kraftfahrzeugs einfügt.

Diese Aufgaben werden erfindungsgemäß mit Fensterrollos mit den Merkmalen der Ansprüche 1, 2 oder 3 gelöst.

Das neue Fensterrollo weist einen Träger auf, der, entsprechend des gewünschten Fensters, zugeschnitten ist. Der Träger selbst ist entweder auf der Innenseite entsprechend der Wagenfarbe eingefärbt, oder auf der Innenseite entsprechend der Innenverkleidung, oder aber er ist auf beiden Seiten unterschiedlich eingefärbt, wobei die eine Seite der Innenverkleidung entspricht und die andere Seite der Wagenfarbe bzw. -lackierung. Auf diese Weise wird bei geschlossenem Fensterrollo von außen eine weitgehend geschlossene farblicher Eindruck erweckt. Umgekehrt ist vom inneren her die ausgefahrene Rollobahn eine Verlängerung oder Ergänzung der vorhandenen Innenverkleidung mit der entsprechenden Farbe. Der schwarze oder dunkle Fleck im Verlauf der Innenverkleidung, den sonst die üblichen Rollos bilden, wird vermieden.

Zweckmäßigerweise handelt es sich bei den Träger für die Rollobahn um einen Träger, der selbst in der Weise undurchlässig ist, dass von der Gegenseite, die auf einer Seite aufgebrachte Farbe nicht erkennbar ist. Hierdurch ist es möglich, beide Seiten des Trägers jeweils unterschiedlich einzufärben. Die Lichtdurchlässigkeit die erforderlich ist, wird beispielsweise durch Öffnungen in Gestalt von Löchern oder Maschen in einem Gewirke oder die Öffnungen in Geweben zwischen Kett- und Schussfaden erreicht.

Es ist auch möglich ein Teil entsprechend einzufärben, während ein anderer Bereich uneingefärbt bleibt.

Im Übrigen sind Weiterbildungen der Erfindung Gegenstand von Unteransprüchen.

Es sind eine Reihe von Abwandlungen möglich, die sich aus den jeweiligen Umständen ergeben und nicht im Einzelnen beschrieben werden müssen, wie dies für den Fachmann sofort einzusehen ist.

In der Zeichnung ist ein Ausführungsbeispiel des Gegenstandes der Erfindung dargestellt. Es zeigen:
- Fig. 1: die Rollobahn 25 besteht aus einem Träger dessen Material, für sich genommen, nicht lichtdurchlässig ist,
- Fig. 2: das Antriebsprinzip für ein Fensterrollo, nebst Ausführungsformen von Trägern für Rollobahnen, jeweils im Ausschnitt,
- Fig. 3: einen Ausschnitt aus einer zweifarbigen Rollobahn und
- Fig. 4: das Dach eines Kraftfahrzeuges in einer Draufsicht und im Ausschnitt, in Verbindung mit einem erfindungsgemäßen Rollo.

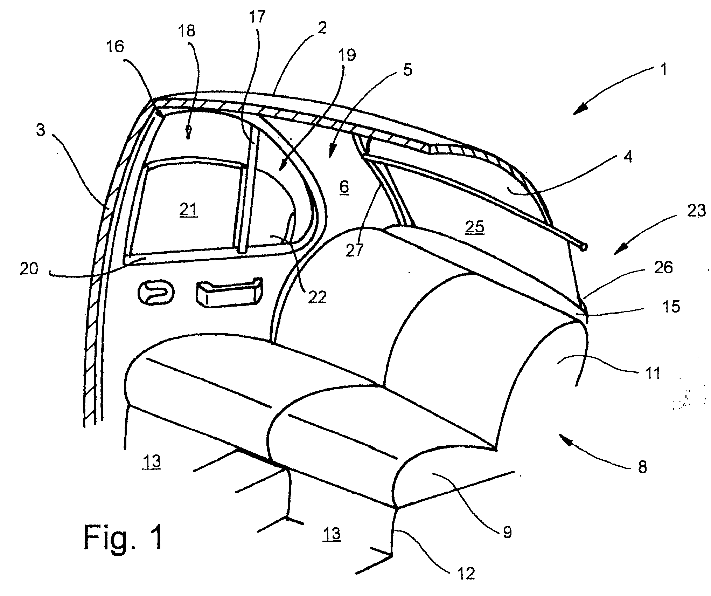

Fig. 1 stellt den aufgebrochenen, abgeschnittenen Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht. So sind beispielsweise Karosserieinnenstrukturen, wie Versteifung und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster an einer C-Säule 5, die sich im Abstand zu der B-Säule 3 befindet. Die C-Säule 5 trägt eine Innenverkleidung 6.

Zwischen der B-Säule 3 und der C-Säule 5 ist an der B-Säule 3 eine hintere, rechte Seitentür 7 in bekannter Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und vor der Fußräume 13 ausgebildet sind.

Auf der Höhe der Oberkante der Rücksitzlehne 11 erstreckt sich eine Hutablage 15 zu der Unterkante der Heckscheibe 4.

Die hintere, rechte Seitentür ist in der für Limousinen üblichen Weise mit einem Seitenfenster 16 versehen. Das Seitenfenster 16 wird durch eine etwa vertikal verlaufende Strebe 17 in ein im wesentlichen viereckiges Fensterfeld 18 sowie ein etwa dreieckiges Fensterfeld 19 aufgeteilt. Am unteren Ende werden die beiden Felder 18 und 19 von einer durchlaufenden Fensterbrüstung 20 begrenzt.

Die in dem Fensterfeld 18 vorhandene Scheibe ist in der bekannten Weise auf und ab zu bewegen, wozu sie unter anderem in der vertikalen Strebe 17 in bekannter Weise geführt ist. Die in dem dreieckigen Fensterfeld 19vorhandene Scheibe ist starr angeordnet.

Beide Fensterfelder 18 und 19 sind durch jeweils zugeordnete Rollobahnen 21 und 22 abzuschatten. Der Antriebsmechanismus für die beiden Rollobahnen 19 und 21 befindet sich in dem Innenraum der Tür 7 unterhalb der Fensterbrüstung 20.

Auf der Innenseite vor dem Heckfenster 4 befindet sich ein Heckscheibenrollo 23. Von dem Heckscheibenrollo 23 ist dessen teilweise ausgezogene Rollobahn 25, die durch einen Schlitz 26 in der Hutablage 15 ausgezogen wird, sowie eine der seitlichen Führungsschienen 27 zu erkennen. Die Führungsschiene 27 beginnt an der hinter der Rücksitzlehne 11 vorhandenen Hutablage 15 und verläuft neben der seitlichen Fensterkante. Ein weitere Führungsschiene ist spiegelbildlich angeordnet.

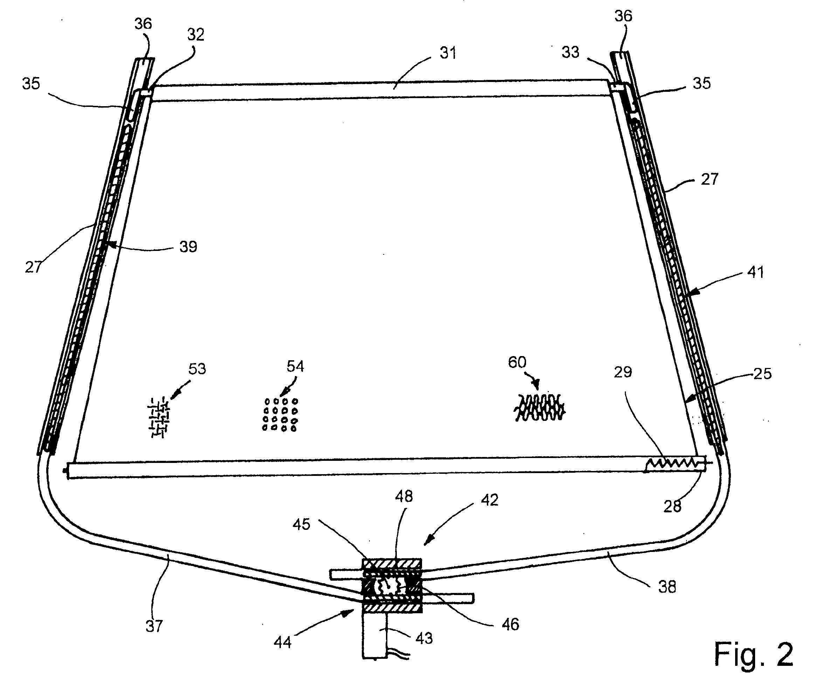

Der prinzipelle Aufbau des Heckscheibenrollos 14 ergibt sich aus Fig. 2.

Unterhalb der Hutablage 15 ist, wie sich aus Fig. 2 ergibt, eine Wickelwelle 28 drehbar gelagert, an der mit einer Kante die Rollobahn 25 befestigt ist. Die Wickelwelle 28 ist mit Hilfe eines schematisch angedeuteten Federmotors 29 im Sinne des Aufwickelns der Rollobahn 25 auf die Wickelwelle 28 vorgespannt. Hierzu ist eine Schraubenfeder vorgesehen, die einends karosseriefest verankert und andernends in der Wickelwelle 28 festgelegt ist.

Die Rollobahn 25 weist einen etwa trapezförmigen Zuschnitt auf und ist an ihrer von der Wickelwelle 19 abliegenden Kante mit einer schlauchförmigen Schlaufe 31 versehen. Durch die schlauchförmige Schlaufe 31 führt ein Auszugsprofil oder Spriegel, in dem Endstücke 32 und 33 teleskopartig gelagert sind. Die Endstücke 32 und 33 weisen einen Halsteil 34 auf, der einen kleineren Durchmesser aufweist als ein sich daran anschließendes Führungsglied 35, das die Gestalt eines kurzen zylinderförmigen Abschnitts aufweist. Die Führungsglieder 35 laufen in den Führungsschienen 27, die neben den beiden Seitenkanten des Heckfensters 4 angeordnet sind.

Jede der Führungsschienen 16 enthält eine hinterschnittene Führungsnut 36, die sich in Richtung auf die Rollobahn 15 in einem Führungsschlitz öffnet.

Das untere Ende jeder Führungsschiene 27 ist mit einem Führungsrohr 37, 38 verbunden, in denen ausknicksicher zwei biegsame Schubglieder 39 und 41 geführt sind. Die biegsamen Schubglieder 39 und 41 sind sogenannte Suflexwellen. Sie bestehen aus einem zylinderförmigen Kern, der von einer schraubenförmig verlaufenden Rippe umgeben ist. Auf diese Weise wird eine Art flexibler Zahnstangen mit Rundumverzahnung erhalten.

Die Führungsrohre 37 und 38 verbinden die Führungsschienen 27 mit einem Getriebemotor 42. Der Getriebemotor 42 setzt sich aus einem permanent erregten Gleichstrommotor 43 und einem Getriebe 44 zusammen auf dessen Ausgangswelle 45 ein Stirnzahnrad 46 drehfest sitzt. Das Zahnrad 46 kämmt mit den beiden Schubgliedern 39, 41 formschlüssig. Die Schubglieder 39, 41 laufen tangential an die an diametral gegenüberliegenden Seiten an dem Stirnzahnrad 46 vorbei und sind hierzu in entsprechenden Bohrungen 47, 48 geführt.

Durch Ingangsetzen des Getriebemotors 42 werden die Schubglieder 39, 41 wahlweise vorgeschoben oder zurückgezogen. Der Bewegung der Schubglieder 39, 41 folgen die Führungsstücke 32, 33. Diese werden mit Hilfe des Federmotors 29 gegen die freien Enden der Schubglieder 39, 41 anliegend gehalten, die sich in den Führungsnuten 36 befinden.

Auf der der Fahrzeugaußenseite zugekehrten Seite ist der Träger der Rollobahn mit einer Farbe beschichtet/eingefärbt, die der Lackierung des Fahrzeugs, zumindest im Bereich des Heckfensters, oberhalb der Gürtellinie entspricht. Hierdurch entsteht, von außen gesehen, bei ausgefahrener Rollobahn ein in sich geschlossener Farbeindruck. Das mit dem Sonnenschutzrollo versehene Heckfenster stellt keine schwarze oder dunkle Unterbrechung der sonstigen Farbe her. Dies ist insbesondere bei hellen Fahrzeugen von Bedeutung und dort besonders bei Fahrzeugen, die in bunten Farben lackiert sind.

Wenn an dieser Stelle von Gleichfarbigkeit die Rede ist, ist der Grundton der Farbe gemeint, nicht die Farbsättigung oder ihr Weißwert. So kann beispielsweise die Lackierung Grün sein, während für das Rollo auf der Außenseite eine Farbe gewählt wird, die ein helleres Grün darstellt, obwohl der Grundton in beiden Fällen derselbe ist.

Ein solcher Farbeindruck kann erzeugt werden, wenn beispielsweise ein Trägermaterial verwendet wird, das von Haus aus Weiß ist, also eine helle unbunte Farbe darstellt. Dieser Träger kann auf der Außenseite durch drucken oder sprühen eingefärbt werden. Durch entsprechende Intensität beim Bedrucken der nebeneinander liegenden Farbpunkte, können auf diese Weise alle Farbsättigungen von Weiß bis zum weißfreien Grün erzeugt werden.

Es ist auch möglich einen Träger zu verwenden, dessen Grundfarbe beispielsweise ein helles Grau ist. Ein solches helles Grau passt zu einem Fahrzeug mit einer hellgrauen Innenverkleidung. Das ausgefahrene Rollo würde dann die Innenverkleidung bzw. den Himmel in derselben Farbe fortsetzen und ebenfalls nicht als störender dunkler Fleck in Erscheinung treten. Ein helles Grau ließe sich auf der Außenseite wiederum in der Wagenfarbe bedrucken, wobei eine entsprechende Farbsättigung eingestellt werden kann. Außerdem kann der Weißwert durch die Verwendung eines mehr oder weniger hellen Graus als Grundton verändert werden.

Diese Einfärbung der Innen- oder Außenseite der Rollobahn beschränkt sich nicht auf ein Heckscheibenrollo. Vielmehr können auch die Seitenscheiben, wie sie in Fig. 1 schematisch gezeigt sind, mit farbigen Rollos ausgestattet werden. Dabei soll unter farbigem Rollo hier eine Einfärbung der Rollobahn, entsprechend der Lackierung der Fahrzeugkarosserie und/oder der Innenverkleidung verstanden werden, mit Ausnahme von Schwarz. Farbig soll insoweit nicht nur auf die bunten Farben beschränkt werden. Vielmehr sollen auch unbunte Farben, wie Weiß oder Hellgrau, mit umschlossen sein.

Es besteht auch die Möglichkeit die Rollos auf der Außenseite mit Metalleffektplatten zu versehen, um den gewünschten Farbeindruck zu bekommen. Auch Einfärbungen der unbunten Weiß- oder Grautönen mit dem entsprechenden Farbstich ist möglich.

Als Träger kommen, wie bei 53 angedeutet, Gewebe in Frage. Die Fäden aus denen das Gewebe hergestellt ist, sind als solche weitgehend lichtundurchlässig, so dass eine farbliche Bedruckung auf der einen Seite von der anderen Seite her nicht zu erkennen ist. Die andere Seite ist damit mit einer anderen Farbe einzufärben, vorausgesetzt es werden Farben verwendet, die beim Auftragen sich nicht durch die Faser hindurch auf die andere Seite durchsaugen.

Wie bei 54 gezeigt, kommen auch an sich lichtundurchlässige Folien in Frage, die auf der betreffenden Seite entsprechend eingefärbt sind. Um die gewünschte Lichtdurchlässigkeit zu erhalten sind die Folien, wie bei 54 schematisch angedeutet, gelocht. Das Verhältnis zwischen Lochweite und Steg zwischen den Löchern legt die Lichtdurchlässigkeit fest.

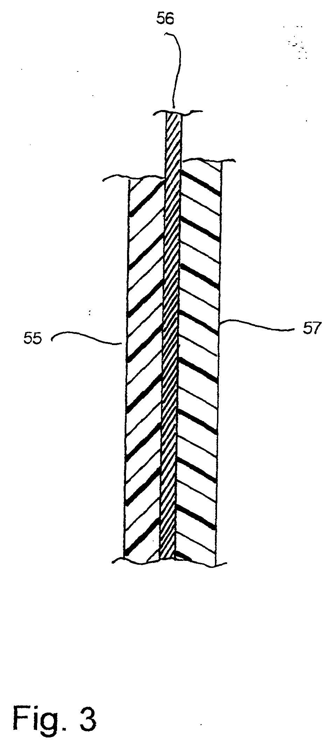

Im Falle von lichtundurchlässigen Folien kann die gewünschte unterschiedliche Farbigkeit der Seiten der Rollobahn durch Aufeinanderlaminieren von Folien erreicht werden, wobei ggf. in der Mitte dazwischen eine lichtundurchlässige Schicht, beispielsweise aus Aluminium, enthalten ist. Ein solcher Aufbau ist schematisch in Fig. 3 gezeigt. Die innere Schicht ist hierbei mit 55, die äußere Schicht mit 56 und die lichtundurchlässige Zwischenschicht mit 57 bezeichnet.

An Stelle eines Gewebes, wie es bei 53 gezeigt ist, können gemäß Fig. 2 auch Maschenwaren, beispielsweise ein Gewirke, entsprechend dem Ausschnitt bei 60 eingesetzt werden.

Die Erfindung, wie sie zuvor in Verbindung mit dem Seitenfenster 16 bzw. dem Heckfenster 4 beschrieben ist, ist nicht auf diese Arten von Fenstern beschränkt.

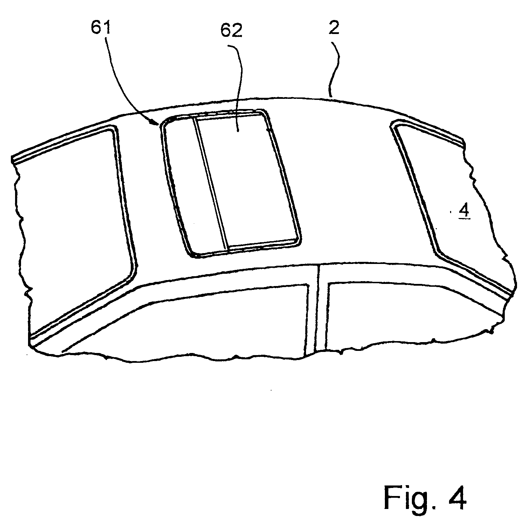

Fig. 4 zeigt eine Draufsicht auf ein Fahrzeug mit dem Dach 2. In dem Dach 2 ist ein Dachfenster, beispielsweise in Gestalt eines Glasschiebedach 61 enthalten. Das dort teilausgezogene Rollo 63 kann ebenfalls hinsichtlich der Farbe, die durch das Dachfenster 61 hindurch sichtbar ist an die Lackierung des Fahrzeugs in dem Dachbereich angepasst sein, während die nicht sichtbare Unterseite der Rollobahn, d.h. jene Seite, die dem Innenraum zugekehrt ist, die Farbe des Fahrzeughimmels aufweist.

Schließlich ist zu beachten, dass die Erfindung in Verbindung mit einem elektrisch betätigten Fensterrollo erläutert ist. Es besteht jedoch keine Notwendigkeit, die Erfindung nur auf solche Antriebe zu beschränken. Vielmehr sind auch handbetätigte Rollos mit unterschiedlicher Durchlässigkeit zu versehen, die sich in Richtung parallel oder quer zur Wickelrichtung ändert. Für ein solches Rollo bedarf es beispielsweise nicht der beiden Führungsschienen 27. Statt dessen ist das Auszugsprofil der Schlaufe 31 mit wenigstens einem Haken und/oder einem Handgriff versehen, um das Auszugsprofil auszuziehen und an geeigneter Stelle neben der betreffenden Fensterkante einzuhängen.

Fensterrollos von Kraftfahrzeugen weisen eine Rollobahn auf. Die Rollobahn ist auf der dem Fahrzeuginneren zugekehrten Seite in einer Weise farbig, wie es der Innenausstattung des Fahrzeugs entspricht. Die Außenseite hingegen zeigt eine Farbe entsprechend der Lackierung des Fahrzeugs, zumindest auf Höhe des Fensters.

## Patentansprüche

1. Fensterrollo (23) für Fenster von Kraftfahrzeugen, die eine farbig lackierte Karosserie und in der Karosserie eine Innenverkleidung (6) aufweisen,
mit einer Wickelwelle (28), die drehbar gelagert ist,
mit einer Rollobahn (21,22,25), die mit einer Kante an der Wickelwelle (28) befestigt ist, wobei die Rollobahn (21,22,25) auf ihrer dem Fahrzeuginneren zugekehrten Seite eine Farbe aufweist, die der Farbe der Innenverkleidung (6) entspricht, soweit die Farbe der Innenverkleidung (6) verschieden von schwarz ist, und
mit einer Antriebseinrichtung (29,44) wenigstens für die Wickelwelle (28) um die Wickelwelle (28) im Sinne des Aufwickelns der Rollbahn (21,22,25) zu bewegen.

2. Fensterrollo (23) für Fenster von Kraftfahrzeugen, die eine farbig lackierte Karosserie und in der Karosserie eine Innenverkleidung (6) aufweisen,
mit einer Wickelwelle (28), die drehbar gelagert ist,
mit einer Rollobahn (21,22,25), die mit einer Kante an der Wickelwelle (28) befestigt ist, wobei die Rollobahn (21,22,25) auf ihrer durch das Fenster (4,16) hindurch erkennbaren Seite eine Farbe aufweist, die der Farbe der Karosserie zumindest auf der Höhe des Fensters (4,16) entspricht, soweit die Farbe der Karosserie verschieden von schwarz ist und
mit einer Antriebseinrichtung (29,44) wenigstens für die Wickelwelle (28) um die Wickelwelle (28) im Sinne des Aufwickelns der Rollbahn (21,22,25) zu bewegen.

3. Fensterrollo (23) für Fenster von Kraftfahrzeugen, die eine farbig lackierte Karosserie und in der Karosserie eine Innenverkleidung (6) aufweisen,
mit einer Wickelwelle (28), die drehbar gelagert ist,
mit einer Rollobahn (21,22,25), die mit einer Kante an der Wickelwelle (28) befestigt ist, wobei die Rollobahn )21,22,25) auf ihrer dem Fahrzeuginneren zugekehrten Seite eine Farbe aufweist, die der Farbe der Innenverkleidung (6) entspricht, und auf ihrer durch das Fenster (4,16) hindurch erkennbaren Seite eine Farbe aufweist, die der Farbe der Karosserie zumindest auf der Höhe des Fensters (4,16) entspricht, soweit entweder die Farbe der Innenverkleidung (6) oder die Farbe der Karosserie verschieden von schwarz ist, und
mit einer Antriebseinrichtung (29,44) wenigstens für die Wickelwelle (28) um die Wickelwelle (28) im Sinne des Aufwickelns der Rollbahn (21,22,25) zu bewegen.

4. Modellserie eines Kraftfahrzeugtyps, bei der die Fensterrollos nach einem der Ansprüche 1 bis 3 ausgeführt ist.

5. Fahrzeugrollo nach einem der Ansprüche 1 bis 3, **dadurch gekennzeichnet, dass** die Rollobahn (21,22,25) aus einer Folie gebildet ist, die auf der Seite die entweder dem Fahrzeuginneren oder der Lackierung entsprechen soll, mit der entsprechenden Farbe eingefärbt ist.

6. Fahrzeugrollo nach einem der Ansprüche 1 bis 3, **dadurch gekennzeichnet, dass** die Rollobahn (21,22,25) aus einem Träger besteht, dessen Material an sich Lichtundurchlässig ist, wobei die Lichtdurchlässigkeit durch Öffnungen in dem Träger erzeugt wird, und dass der Träger entsprechend der Farbe der Fahrzeuglackierung oder der Innenverkleidung eingefärbt ist.

7. Fahrzeugrollo nach einem der Ansprüche 1 bis 3, **dadurch gekennzeichnet, dass** die Rollobahn (21,22,25) aus einem Träger besteht, dessen Material an sich Lichtundurchlässig ist, wobei die Lichtdurchlässigkeit durch fein verteilte kleine Öffnungen (54) in dem Träger gebildet ist, und dass der Träger auf der nach außen gekehrten Seite der Rollobahn (21,22,25) oder auf der nach innen gekehrten Seite der Rollobahn (21,22,25) mit einer Farbe eingefärbt ist, die der Fahrzeuglackierung oder dem Fahrzeuginneren entspricht.

8. Fahrzeugrollo nach einem der Ansprüche 1 bis 3, **dadurch gekennzeichnet, dass** der Träger auf beiden Seiten bedruckt ist.

9. Fahrzeugrollo nach einem der Ansprüche 1 bis 3, **dadurch gekennzeichnet, dass** der Träger aus einer gelochten Folie besteht.

10. Fahrzeugrollo nach einem der Ansprüche 1 bis 3, **dadurch gekennzeichnet, dass** die Folie eine mehrlagige Folie ist.

11. Fahrzeugrollo nach einem der Ansprüche 1 bis 3, **dadurch gekennzeichnet, dass** der Träger aus einem Gewebe oder einer Maschenware besteht.

12. Fensterrollo nach einem der Ansprüche 1 bis 3, **dadurch gekennzeichnet, dass** es sich bei dem Fahrzeugfenster um ein Seitenfenster, ein Heckfenster oder ein Glasdachfenster oder ein Glasdach handelt.
